# EUROPÄISCHE PATENTANMELDUNG

(11) **EP 4 238 460 A1**
(43) Veröffentlichungstag der Anmeldung: **06.09.2023**
(21) Anmeldenummer: 22159566.3
(22) Anmeldetag: 01.03.2022
(51) Int. Cl.: A47J 37/07

(54) **GRILLVORRICHTUNG**

(71) Anmelder: Preidl, Michael, 74248 Ellhofen (DE)
(72) Erfinder: Preidl, Michael, 74248 Ellhofen (DE)
(74) Vertreter: Wimmer, Stephan

(57) **Zusammenfassung**

Grillvorrichtung (10) mit einer Grillschale (12) und einer Grillfläche (20) für den Außenbereich, dadurch gekennzeichnet, dass die Grillschale (12) auf einem Sockel (16) aufgesetzt ist und wenigstens die Grillschale (12) eine Fassung (14) aufweist, wobei die Grillschale (12) aus einem durchsichtigen oder durchscheinenden Material ausgebildet ist.

## Beschreibung

Die Erfindung betrifft eine Grillvorrichtung mit einer Grillschale gemäß dem Oberbegriff des Anspruchs 1.

### Stand der Technik

Grillvorrichtungen erfreuen sich sowohl in professionellen Küchen als auch im Freizeitsektor großer Beliebtheit. In der Regel handelt es sich dabei um Grillgeräte, die einen Behälter umfassen, in dem das die Wärmeenergie abgebende Verbrennungsmaterial verbrannt wird, und einen Grillrost, der über dem Behälter angeordnet wird.

Bekannt sind ebenso Gasgrille, bei denen ein in einen Grillbehälter einströmendes, leicht brennbares Gas wie beispielsweise Propan, entfacht wird und die resultierende Flamme Lavasteine erwärmt, die als Wärmespeicher dienen.

Die DE 20 2013 005 728 U1 offenbart eine Grilleinrichtung mit einem rotierenden Grill, wobei eine Rotationsbewegung durch die Wärmeerzeugung einer dem Grillen dienenden Glutmasse bewirkt wird und der Grillrost zur Erzeugung der Drehbewegung aus strahlenförmig angeordneten flächigen Grillstäben besteht und der Grillrost entweder unter einem Galgen hängend angeordnet ist oder um einen Ständer rotierend gelagert ist und der Grillrost nur in Teilflächen mit flächigen Grillstäben ausgestattet sein kann.

Nachteilig an den bekannten Grillvorrichtungen ist, dass die Vorrichtungen bzw. die Gefäße zur Aufnahme des Verbrennungsmaterials aus Metall ausgebildet sind und die Verbrennungsmaterialien wie Holz, Kohle, Holzkohle oder Holzbrennstoffe dort hineingelegt und angezündet werden. Das Feuer ist bei den bekannten Grillvorrichtungen nur von oben zu sehen. Zudem strahlen die Grillvorrichtungen aus metallenen Werkstoffen die vom Feuer erzeugte Wärme insbesondere in Richtung des Bodens, auf dem sie angeordnet sind, ab. Dabei wird die Umgebung um die Grillvorrichtung so stark erhitzt, dass Beschädigungen des Untergrunds zu befürchten sind.

Aufgabe der Erfindung ist es daher, eine Grillvorrichtung zur Verfügung zu stellen, die sowohl das Grillen von Speisen ermöglicht als auch derartige thermische Eigenschaften aufweist, dass die Umgebung, insbesondere der Untergrund, nicht negativ erhitzt wird.

### Offenbarung der Erfindung

Die Erfindung wird durch die Merkmale des Hauptanspruchs offenbart. Ausführungsformen und Weiterbildungen sind Gegenstand der sich an den Hauptanspruch anschließenden weiteren Ansprüche.

Es wird eine Grillvorrichtung offenbart, die aus einer Kombinationsanordnung aus einer Grillschale, die auf einem Sockel anordenbar ist, mit einem diese Grillschale umgebende Fassung ausgebildet ist, an der eine Grillfläche befestigt oder worauf die Grillfläche aufgelegt werden kann.

Die Fassung ist insbesondere aus einem metallenen Werkstoff oder Leichtmetall ausgebildet. Geeignet ist beispielsweise ein rostfreier Edelstahl. Die Fassung umhüllt zumindest die Grillschale. Sie kann in einem Ausführungsbeispiel sowohl die Grillschale als auch den Sockel umhüllen. Auf einer ausgebildeten Auflagefläche kann eine Grillfläche aufgelegt werden. Die Grillfläche kann flächig als Scheibe mit einer mittigen Öffnung ausgebildet sein. Die Grillfläche kann auch als Rost aus einem Gitter ausgebildet sein. Die Grillfläche ist aus Metall, Stein oder einem anderen geeigneten Werkstoff ausgebildet. Auf der Grillfläche kann das Grillgut aufgelegt werden, das durch die aufsteigende Wärme eines in der Grillschale erhitzten Brennguts gegrillt werden kann.

Die Grillschale ist bei dieser Kombinationsanordnung aus einem durchsichtigen oder durchscheinenden Material ausgebildet. Das Material kann insbesondere aus einem Glas oder glasartigen Werkstoff ausgebildet sein. Dieses Material kann beispielsweise Quarz- oder Borosilikatglas sein. Das Material ist hitzebeständig, feuerfest und daher gut geeignet als Einsatz bei der Verwendung zum Grillen von Speisen. Insbesondere Quarzglas ist aufgrund seiner Eigenschaften zum Einsatz in der erfindungsgemäßen Kombinationsanordnung geeignet.

Quarzglas, auch als Kieselglas bezeichnet, ist ein Glas mit einem amorphen Gefüge, das üblicherweise keine Beimengungen von Natriumcarbonat, also Soda, oder Calciumoxid aufweist, sondern aus reinem Siliziumdioxid (SiO₂) ausgebildet ist. Es weist eine hohe Reinheit auf und ist transparent oder transluzent. Industriell hergestelltes Quarzglas hat abhängig vom Ausgangsmaterial und Fertigungsprozess unterschiedliche sehr geringe Konzentrationen von Verunreinigungen. Das Quarzglas kann durch Aufschmelzung und Wiedererstarrung von Quarz beispielsweise aus Quarzsand hergestellt werden.

Das Quarzglas weist einen geringen thermischen Ausdehnungskoeffizienten und eine hohe Temperaturwechselbeständigkeit auf. Dies und die hohe Erweichungstemperatur erlauben eine Erhitzung des üblicherweise festen Brennguts auf eine Temperatur bis ca. max. 1400° C. Es ist chemisch beständig und hat eine vergleichsweise hohe Durchschlagsfestigkeit. Durch seine Eigenschaften wirkt die Grillschale aus dem angegebenen Material wie ein Isolationskörper gegenüber der Umgebung, die durch das Grillen von Lebensmitteln nicht unangemessen erhitzt werden soll.

Quarzglas weist eine nahezu vollständige Transmission von infraroter Strahlung auf. Diese Eigenschaft wird vom Menschen als angenehme Wärmestrahlung empfunden. Das Quarzglas ist kratzfest, wasserfest und säurefest.

Der Sockel kann aus unterschiedlichen Materialien ausgebildet sein, beispielsweise Holz, Metall, Stein o.dgl. Der Sockel kann unterschiedliche Querschnitte aufweisen, beispielsweise rund, oval, quadratisch, sechseckig, oder jede andere geeignete geometrische Ausformung. Der Sockel kann auch eine Bodenplatte aufweisen oder auf einer solchen angeordnet werden. Diese Bodenplatte verhindert zusätzlich eine Erwärmung des Bodens bzw. Untergrunds, auf dem die Grillvorrichtung aufgestellt ist.

Die erfindungsgemäße Grillvorrichtung hat dabei den Vorteil, dass sie als Kombinationsanordnung wie ein Bausatz individuell zusammengestellt werden kann. Die Ausbildung der Grillschale aus Glas minimiert die Erhitzung der Umgebung beim Grillen. Es wird ein optischer Effekt durch die Ausbildung des Materials der Grillschale insbesondere in der Dunkelheit erzielt. Die Grillfläche kann ebenso aus Glas oder Quarzglas ausgebildet sein. Daher ist diese erfindungsgemäße Grillvorrichtung besonders im Außenbereich bzw. Garten einsetzbar.

Weitere Vorteile und vorteilhafte Ausgestaltungen der Erfindung sind der nachfolgenden Figurenbeschreibung, den Zeichnungen und den Ansprüchen entnehmbar.

Nachfolgend wird ein Ausführungsbeispiel der erfindungsgemäßen Lösung anhand der beigefügten schematischen Zeichnungen näher erläutert. Es zeigt:
- Fig. 1: zeigt schematisch eine Grillvorrichtung mit einer umgebenden Fassung mit einer aufgelegten Grillfläche im Längsschnitt,
- Fig. 2: zeigt eine Grillvorrichtung mit einer Befestigungsvorrichtung für eine eingeschobene Grillvorrichtung sowie eine Bodenplatte im Längsschnitt,
- Fig. 3: stellt die Grillvorrichtung aus Fig. 1 mit einer umgebenden Fassung mit Verstrebungen in einer Seitenansicht dar,
- Fig. 4: stellt schematisch von der Seite die Grillvorrichtung mit einem würfelförmig ausgebildeten Sockel dar.

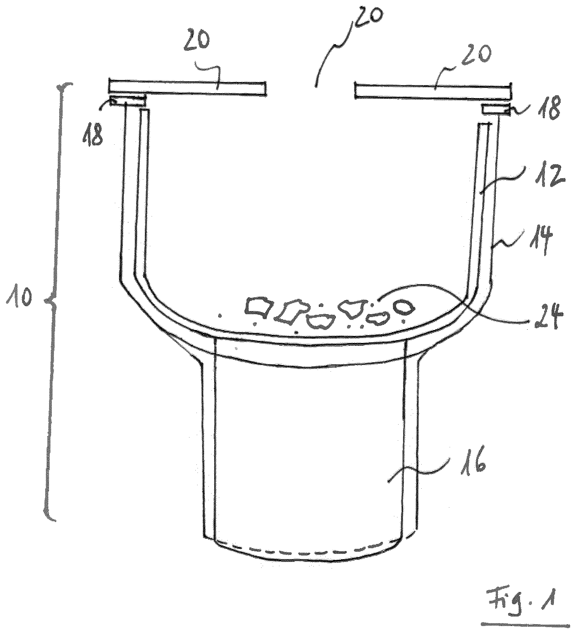

In Fig. 1 ist eine Grillvorrichtung 10 dargestellt. Die Grillvorrichtung 10 ist eine Kombinationsanordnung mit mehreren Bauteilen. Diese Kombinationsanordnung kann als Bausatz ausgebildet sein. Die Grillvorrichtung 10 umfasst eine Grillschale 12. Die Grillschale 12 ist in diesem Ausführungsbeispiel aus Quarzglas ausgebildet. Das Quarzglas ist kratzfest, wasserfest und säurefest und daher besonders zum Einsatz in der Grillvorrichtung 10 geeignet.

Die Grillvorrichtung 10 weist des Weiteren eine Fassung 14 auf. Die Fassung 14 ist im gezeigten Ausführungsbeispiel aus einem metallenen Werkstoff ausgebildet. Geeignet ist beispielsweise ein rostfreier Edelstahl. Die Fassung 14 umhüllt zumindest die Grillschale 12. Die Grillschale 12 kann in die Fassung 14 eingesetzt werden. In diesem Fall kann die Fassung 14 geeignete Halterungen bzw. Auflageflächen aufweisen. Die Fassung 14 hat tragende Funktion, einerseits für die Grillschale 12 alleine oder unterstützend zu einem Sockel 16. Die Fassung 14 kann in einem Ausführungsbeispiel sowohl die Grillschale 12 als auch den die Grillschale 12 tragenden Sockel 16 umhüllen. Der Sockel 16 ist in diesem Ausführungsbeispiel in etwa kreisrund ausgebildet.

Auf einer an der Fassung 14 ausgebildeten Auflagefläche 18 kann eine Grillfläche 20 aufgelegt werden. Die Grillfläche 20 kann flächig als Scheibe mit einer mittigen Öffnung 22 ausgebildet sein. Die Öffnung 22 dient dem Entweichen von Hitze aus der Grillschale 12 nach oben. Die Grillfläche 20 ist aus Metall, Stein oder einem anderen geeigneten Werkstoff, z.B. auch aus Glas oder Quarzglas, ausgebildet. Die Grillfläche 20 kann auch als durchgehender Rost aus einem Gitter ausgebildet sein. Die Grillfläche 20 kann einen Durchmesser aufweisen, der in etwa bündig mit der Außenkante der Auflagefläche Auf der Grillfläche 20 kann das Grillgut aufgelegt werden, das durch die aufsteigende Wärme eines in der Grillschale 12 erhitzten Brennguts 24 gegrillt werden kann. Die Grillschale 12 kann einen Durchmesser von ca. 40 bis 150 cm sowie eine daran angepasste Höhe aufweisen. Die Auflagefläche 18 kann Halte- bzw. Sicherungseinrichtungen zur Lagesicherung der Grillfläche 20 aufweisen.

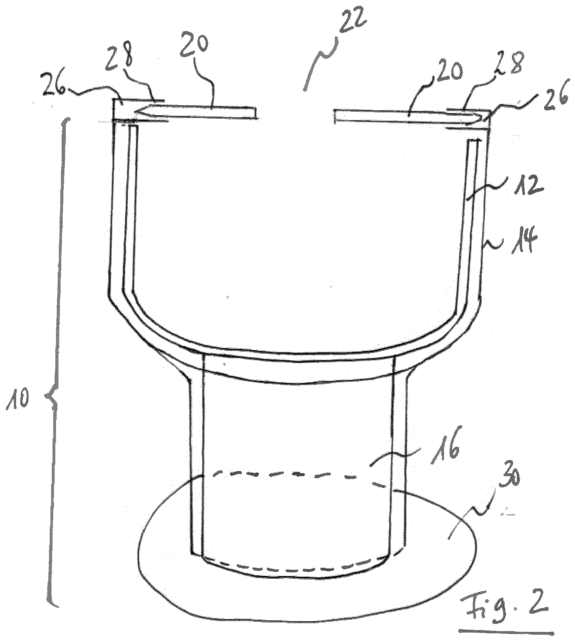

Fig. 2 zeigt eine weitere Ausführungsform der Grillvorrichtung 10. An der Fassung 14 der Grillvorrichtung 10 sind Aufnahmeeinrichtungen 26 angeordnet. Diese Aufnahmeeinrichtungen 26 weisen Einschuböffnungen 28 auf. Darin kann ein Grillrost oder die Grillfläche 20 eingesetzt und gehalten sein. Die Grillvorrichtung 10 kann mit ihrem Sockel 16 auf einer Bodenplatte 30 aufgesetzt werden.

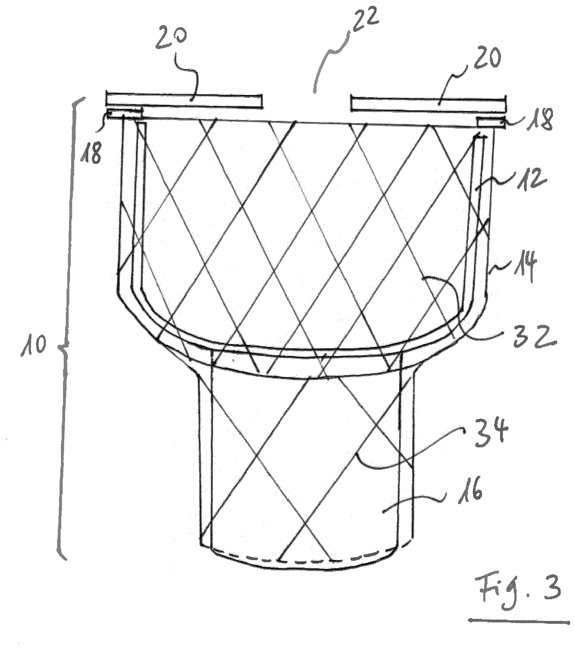

In Fig. 3 ist eine Grillvorrichtung 10 dargestellt, deren Fassung 14 mit gitterförmigen Verstrebungen 32 im Bereich der Grillschale 12 und mit gitterförmigen Verstrebungen 34 im Bereich des Sockels 16 versehen ist. Die Fassung 14 kann aus einem geeigneten in lichtdurchlässiger Weise angeordneten Material, insbesondere Metall wie Edelstahl, mit den genannten Verstrebungen 32, 34 oder in der Form von Maschendraht, Metallstäben, Metallbändern bzw. bogenartigen Metalldrähten, in einer gitter- oder strebenartigen Struktur o.dgl. ausgebildet sein. Die Fassung 14 kann selbsttragend ausgebildet sein.

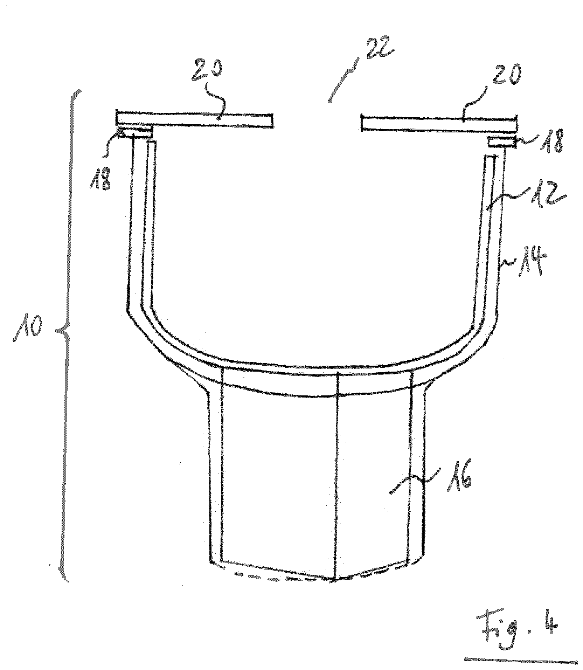

Fig. 4 zeigt die Grillvorrichtung 10 mit einem als Quader ausgebildeten Sockel 16. Die Sockelform kann beliebige geeignete Querschnittsformen aufweisen.

Alle in der Beschreibung, den nachfolgenden Ansprüchen und den Zeichnungen dargestellten Merkmale können sowohl einzeln als auch in beliebiger Kombination miteinander erfindungswesentlich sein.

### Bezugszeichenliste

- 10: Grillvorrichtung
- 12: Grillschale
- 14: Fassung
- 16: Sockel
- 18: Auflagefläche
- 20: Grillfläche
- 22: Öffnung
- 24: Brenngut
- 26: Aufnahmeeinrichtung
- 28: Einschuböffnung
- 30: Bodenplatte
- 32: Verstrebung Grillschalenbereich
- 34: Verstrebung Sockelbereich

## Patentansprüche

1. Grillvorrichtung (10) mit einer Grillschale (12) und einer Grillfläche (20) für den Außenbereich, **dadurch gekennzeichnet, dass** die Grillschale (12) auf einem Sockel (16) aufgesetzt ist und wenigstens die Grillschale (12) eine Fassung (14) aufweist, wobei die Grillschale (12) aus einem durchsichtigen oder durchscheinenden Material ausgebildet ist.

2. Grillvorrichtung (10) nach Anspruch 1, **dadurch gekennzeichnet, dass** die Grillschale (12) aus Quarzglas ausgebildet ist.

3. Grillvorrichtung (10) nach einem der Ansprüche 1 oder 2, **dadurch gekennzeichnet, dass** die Grillfläche (20) aus Glas oder Quarzglas ausgebildet ist.

4. Grillvorrichtung (10) nach einem der vorgehenden Ansprüche, **dadurch gekennzeichnet, dass** die Fassung (14) um den Sockel (16) herumreichend ausgebildet ist.

5. Grillvorrichtung (10) nach einem der vorhergehenden Ansprüche, **dadurch gekennzeichnet, dass** die Fassung (14) aus Metalldrähten, -bändern, oder - geflechten ausgebildet ist.

6. Grillvorrichtung (10) nach Anspruch 5, **dadurch gekennzeichnet, dass** die Fassung (14) eine gitterartige oder verstrebte Struktur mit Verstrebungen im Grillschalenbereich (32) und/oder im Sockelbereich (34) aufweist.

7. Grillvorrichtung (10) nach einem der vorhergehenden Ansprüche, **dadurch gekennzeichnet, dass** die Fassung (14) mindestens eine Auflagefläche (18) aufweist, auf der die Grillfläche (20) aufgelegt ist.

8. Grillvorrichtung (10) nach Anspruch 7, **dadurch gekennzeichnet, dass** die Auflageflächen (18) Sicherungselemente zur sicheren Halterung der Grillfläche (20) aufweisen.

9. Grillvorrichtung (10) nach einem der vorhergehenden Ansprüche, **dadurch gekennzeichnet, dass** die Fassung (14) mindestens eine Aufnahmeeinrichtung (26) aufweist, wobei die Aufnahmeeinrichtung (26) Einschuböffnungen (28) für die Grillfläche (20) hat.

10. Grillvorrichtung (10) nach einem der vorhergehenden Ansprüche, **dadurch gekennzeichnet, dass** die Grillfläche (20) eine mittige Öffnung aufweist.

11. Grillvorrichtung (10) nach einem der vorhergehenden Ansprüche, **dadurch gekennzeichnet, dass** die Grillfläche (20) als Grillrost in einer Gitterform ausgebildet ist.

12. Grillvorrichtung (10) nach einem der vorhergehenden Ansprüche, **dadurch gekennzeichnet, dass** die Grillvorrichtung (10) eine Bodenplatte (30) aufweist.

13. Grillvorrichtung (10) nach einem der vorhergehenden Ansprüche, **dadurch gekennzeichnet, dass** die Grillschale (12) in Form eines Tiegels ausgebildet ist.

14. Grillvorrichtung (10) nach einem der vorhergehenden Ansprüche, **dadurch gekennzeichnet, dass** die Grillschale (12) als Halbkugelschale ausgebildet ist.

15. Grillvorrichtung (10) nach einem der vorhergehenden Ansprüche, **dadurch gekennzeichnet, dass** die Grillschale (12) eine Höhe von 100 mm bis 1.500 mm aufweist.

16. Grillvorrichtung (10) nach einem der vorhergehenden Ansprüche, **dadurch gekennzeichnet, dass** die Grillschale (12) eine Wandstärke von 5 mm bis 20 mm aufweist.

17. Grillvorrichtung (10) nach einem der vorhergehenden Ansprüche, **dadurch gekennzeichnet, dass** die Grillschale (12) einen Durchmesser im Bereich von 500 mm bis 1.200 mm aufweist.
